# EUROPEAN PATENT APPLICATION

(11) **EP 4 586 113 A1**
(43) Date of publication of application: **16.07.2025**
(21) Application number: 24151753.1
(22) Date of filing: 15.01.2024
(51) Int. Cl.: G06F 18/21, G06N 20/20

(54) **TECHNOLOGIES FOR IDENTIFYING FEATURES TO EMPLOY WHEN TRAINING A COMPUTER-IMPLEMENTED MODEL**

(71) Applicant: GM Cruise Holdings LLC, San Francisco CA 94103 (US)
(72) Inventor: UNZUETA CANALS, Marc, 85521 Ottobrunn (DE); MEYER, Michael, 85521 Ottobrunn (DE); SANSON, Jessica Bartholdy, 85521 Ottobrunn (DE)
(74) Representative: Berkenbrink, Kai-Oliver

(57) **Abstract**

Technologies pertaining to identifying a set of features to use when training a computer-implemented model are described. A first computer-implemented model is trained to perform a classification task based upon values for features in a set of features, where the features include features of sensor data and a noise feature. An importance score is computed for each feature in the set of features, and a subset of the set of features is identified based upon the importance scores computed for the features. A second computer-implemented model is then trained to perform the classification task based upon values for the features in the subset of features.

## Description

### BACKGROUND

Autonomous vehicles are configured to navigate over roadways without human conduction. An autonomous vehicle can include a sensor system, such as a radar system, a lidar system, a camera, or the like. The sensor system of the autonomous vehicle outputs data that is indicative of relative location and velocity of objects in an environment of the autonomous vehicle. A computing system is in communication with the sensor system and receives sensor data, where the sensor data includes data output by the sensor system and/or data derived from data output by the sensor system. The computing system controls operation of the autonomous vehicle based upon the sensor data. In an example, the computing system detects and identifies an object in the environment of the autonomous vehicle based upon the sensor data and controls at least one of a propulsion system (e.g., an engine or motor), a steering system, or a braking system of the autonomous vehicle based upon the detected and identified object.

In a more detailed example, the computing system executes a computer-implemented model that is configured to receive values for features of the sensor data and perform a classification task based upon the values for the features. The classification task can be identifying a type of object in an environment of the autonomous vehicle (e.g., a pedestrian, a bicyclist, an automobile, a truck, a traffic light, etc.). When the sensor system is a radar system, features employed by the computer-implemented model to perform the classification task can include x, y, and z values, range, raw magnitude, normalized magnitude, Doppler values, etc. Typically, a designer of the computer-implemented model identifies some relatively large number of features, and the computer-implemented model is trained based upon values for the relatively large number of features.

Because the model is trained to perform the classification task based upon values for a relatively large number of features, execution of the model may require a relatively large amount of computing resources. For instance, the computer-implemented model is a deep neural network (DNN) that includes hundreds to thousands of layers with each layer including hundreds to thousands of nodes. Due at least in part to the number of values provided as input to the computer-implemented model, sophisticated hardware is employed when executing the model. Further, computer-readable memory is consumed by input values provided to the computer-implemented model; the more input values that are provided to the computer-implemented model, the more computer-readable memory that is required to at least temporarily store such input values. Moreover, when the sensor system is configured to transmit values for features to the computing system, bandwidth of a communications channel between the sensor system and the computing system is consumed by the input values. Accordingly, it is desirable for the computer-implemented model to perform the classification task using a relatively small number of feature values while not sacrificing accuracy of classifications output by the computer-implemented model.

### SUMMARY

The following is a brief summary of subject matter that is described in greater detail herein. This summary is not intended to be limiting as to the scope of the claims.

Described herein are various technologies pertaining to identification of a set of features that is to be used to train a computer-implemented model (such as a DNN) for performing a task (such as a classification task), such that after the computer-implemented model is trained, the computer-implemented model is provided with an input vector that includes values for the features in the set and performs the task based upon such values. The set of features includes a number of features that is less than the number of features that may otherwise be used to train the computer-implemented model, and further where the reduction in the number of features used to train the computer-implemented model does not significantly impact accuracy of the computer-implemented model when performing the task. Hence, the technologies described herein exhibit advantages over conventional technologies, in that fewer computing resources are required to execute the computer-implemented model when compared to computer-implemented models where a reduced set of features has not been identified.

With more specificity, a first computer-implemented model can be trained to perform a task based upon values of several features of sensor data (e.g., sensor data corresponding to a radar system, a lidar system, a camera, and/or other suitable sensor system), where the features are identified by a designer of the computer-implemented model as potentially being useful in connection with the computer-implemented model performing the task. Therefore, the first computer-implemented model is trained based upon first values of a first feature and second values of a second feature. After the computer-implemented model is trained, the computer-implemented model can perform the task based upon an input vector that includes a first value of the first feature and a second value of the second feature.

After the first computer-implemented model has been trained, a first score is computed for the first feature and a second score is computed for the second feature, where the first score is indicative of influence of values of the first feature on outputs of the computer-implemented model and the second score is indicative of influence of values of the second feature on outputs of the computer-implemented model. Backpropagation can be employed in connection with computing the first score and the second score. More specifically, validation data is accessed, where the validation data includes an input vector that comprises a first value for the first feature and a second value for the second feature. The validation data also includes a label assigned to the input vector (where, for example, the first computer-implemented model previously output the label based upon the input vector). During backpropagation, weights of edges of the computer-implemented model are fixed (held steady) and a first gradient is computed for the value for the first feature and a second gradient is computed for the value of the second feature. This process is repeated for several input vectors, and gradients for the first feature and gradients for the second feature are summed, where the first score is based upon a summation of the gradients for the first feature and the second score is based upon a summation of the gradients for the second feature

Based upon the first score and the second score, a determination is made that a second computer-implemented model is to be trained to perform the task based upon values of the first feature but not values of the second feature, due to, for example, the score for the first feature being greater than the score for the second feature. In other words, after the second-computer-implemented model is trained, an input vector provided to the second computer-implemented model does not include a value for the second feature. Moreover, as values for the second feature have relatively little influence on outputs of the first computer-implemented model (when compared to influence of values of the first feature on outputs of the first computer-implemented model), accuracy of outputs of the second computer-implemented model is comparable to accuracy of outputs of the first computer-implemented model when performing the task.

In an example, the second feature is noise, and values of the second feature are randomly or pseudo-randomly generated values that are generated in accordance with a predefined distribution (e.g., a Gaussian distribution). When the influence of the noise is greater than the influence of values of the first feature on outputs of the first computer-implemented model, it can be ascertained that the second computer-implemented model need not be trained based upon values for the first feature. In summary, the second computer-implemented model is trained based upon values of fewer features than what was used to train the first computer-implemented model. Accordingly, when performing a task, the second computer-implemented model performs the task using a smaller input vector than what is used by the first computer-implemented model while generating outputs with accuracy that is comparable to accuracy of outputs of the first computer-implemented model.

In an example, the task is identifying types of objects based upon values for features of radar data, where features of the radar data can include magnitude, normalized magnitude, positional coordinates, and so forth. The second computer-implemented model is executed by a computing system of an autonomous vehicle and receives an input vector that includes values for features identified utilizing the approach described above. The second computer-implemented model assigns a label to a detected object in an environment of the autonomous vehicle, and the computing system controls operation of the autonomous vehicle based upon the label assigned to the detected object by the second computer-implemented model.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 is a functional block diagram of a computing system that is configured to identify features that are to be employed by a computer-implemented model when performing a task.
Fig. 2 is a schematic that depicts a computer-implemented model being trained to perform a task based upon values of several features, where the features include noise.
Fig. 3 is a schematic that depicts computation of scores for each feature in several features used to train a computer-implemented model, where a score for a feature is indicative of influence of the feature on outputs generated by the computer-implemented model.
Fig. 4 is a schematic that depicts ranking of features based upon scores assigned to the features.
Fig. 5 is a schematic that depicts identification of features to use when training a computer-implemented model to perform a task.
Fig. 6 is a schematic that depicts a computer-implemented model being trained to perform a task based upon values for a relatively small set of features.
Fig. 7 is a flow diagram illustrating a method for identifying features to employ to train a computer-implemented model to perform a task.
Fig. 8 is a flow diagram illustrating a method for identifying a feature that is to be employed to train a computer-implemented model to perform a task.
Fig. 9 is a schematic that depicts an autonomous vehicle, where the autonomous vehicle includes a computing system that executes a computer-implemented model that is configured to perform a task.

### DETAILED DESCRIPTION

Various technologies pertaining to identifying features to employ to train a computer-implemented model to perform a task are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. Accordingly, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component," "module", and "system" are intended to encompass computer-readable data storage that is configured with computer-executable instructions that cause certain functionality to be performed when executed by a processor. The computer-executable instructions may include a routine, a function, or the like. It is also to be understood that a component, module, or system may be localized on a single device or distributed across several devices.

Described herein are various technologies pertaining to computer-implemented approaches for identifying features of sensor data to employ when training a computer-implemented model to perform a classification task. The sensor data can be or be based upon data generated by a radar system, a lidar system, a camera, and/or other suitable sensor system. Sensor data can be associated with a vast number of features (nearly unlimited). For instance, sensor data corresponding to a radar system can include features such as magnitude, normalized magnitude, position, Doppler, velocity, derivations thereof, and so forth. It is difficult for a designer of a computer-implemented model to identify which features of sensor data to employ when training the computer-implemented model to perform a classification task (such as identifying a type of object in an environment of the sensor system). Conventionally, designers of computer-implemented models are overinclusive with respect to features of sensor data used to train a computer-implemented model. This can be problematic when the computer-implemented model is deployed, however, as larger input vectors correspond to more computing resources needed to execute the computer-implemented model. For example, input vectors are stored in computer-readable memory, and the larger the input vector, the more computer-readable memory that is needed to store the input vector. In addition, processing resources must be allocated to process values of these features when the computer-implemented model is executed. Hence, it is desirable to identify a relatively small number of features to employ when training a computer-implemented model to perform a classification task without significantly impacting accuracy of the computer-implemented model when the computer-implemented model performs the classification task.

The technologies described herein are directed towards identifying features of sensor data to employ when training a computer-implemented model for performing a task, such as a classification task (although the technologies described herein are not limited to a model that is trained to perform a classification task). Other tasks are contemplated, such as image generation, text generation, object tracking, etc. As will be described in greater detail herein, a first computer-implemented model is trained to perform a task based upon first values of a first feature and second values of a second feature. In an example, the first feature is a feature of radar data generated by a radar system, such as magnitude, normalized magnitude, etc., while the second feature is noise and the second values are randomly or pseudo randomly generated values according to a distribution (e.g. a Gaussian distribution). After the first computer-implemented model is trained, a first score is computed for the first feature and a second score is computed for the second feature, where the first score is indicative of influence of the first feature on outputs of the computer-implemented model and the second score is indicative of influence of the second feature on outputs of the first computer-implemented model. Generally, backpropagation is employed in connection with computing the first score and the second score.

Based upon the scores computed for the features, features to employ when training a second computer-implemented model to perform the task are identified. In an example, when the second feature is noise, if the first score is less than the second score, then the second computer-implemented model is trained based upon a set of features that do not include the first feature. In another example, when either of the first score or the second score is not amongst a top threshold number of scores, then the second computer-implemented model is trained based upon features that do not include the first feature and/or the second feature. Thus, the second computer-implemented model is trained based upon fewer features than were used to train the first computer-implemented model without significantly impacting accuracy of outputs of the second computer-implemented model.

Upon the second computer-implemented model being trained, a computing system of an autonomous vehicle can execute the second computer-implemented model. The second computer-implemented model receives values for features upon which the second computer-implemented model has been trained and performs the task based upon the values of the features. The autonomous vehicle is controlled based upon outputs of the second computer-implemented model.

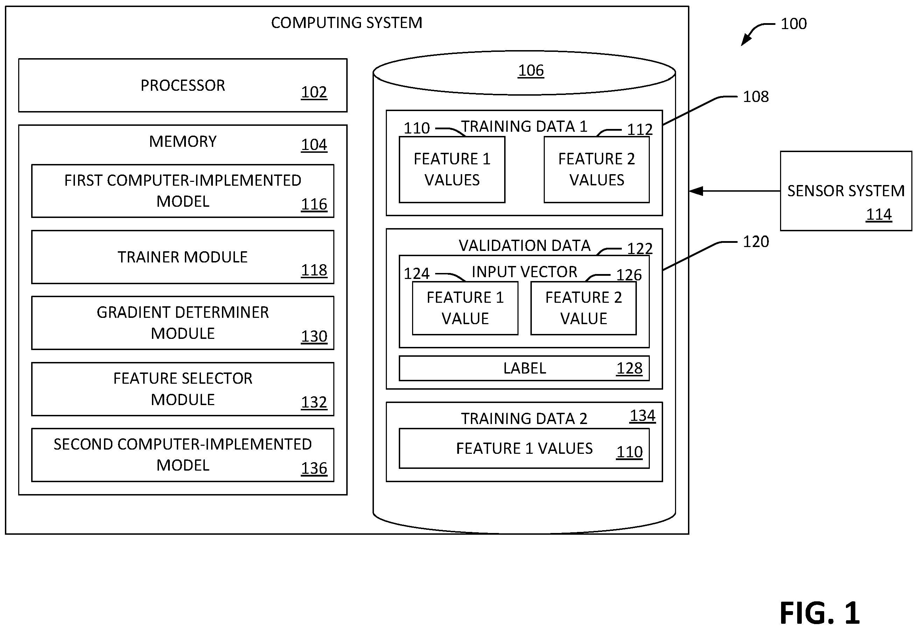

With reference now to Fig. 1, a functional block diagram of a computing system 100 that is configured to identify a feature that is to be used when training a computer-implemented model for performing a task (such as object identification) is illustrated. The computing system 100 includes a processor 102 and memory 104, where the memory 104 includes instructions that are executed by the processor 102. The computing system 100 additionally includes a data store 106 that includes data that can be accessed by the processor 102. Specifically, the data store 106 includes first training data 108 that can be used to train a computer-implemented model that, when trained, is configured to perform a task. The first training data 108 includes first values of a first feature (feature 1 values 110) and second values of a second feature (feature 2 values 112). With more specificity, the first training data 108 can include sensor data, where the sensor data includes data generated by a sensor system 114 or data derived from data generated by the sensor system 114. For example, the sensor system 114 can be a radar sensor system, a lidar sensor system, a camera, and so forth. Further, the first training data 108 can include data generated by multiple different types of sensor systems. Thus, the feature 1 values 110 can be based upon data generated by a lidar sensor system while the feature 2 values 112 can be based upon data generated by a radar sensor system. In an example pertaining to radar, the feature 1 values 110 are range values and the feature 2 values 112 are Doppler values. In yet another example, the feature 1 values 110 include sensor data while the feature 2 values 112 include values for noise (randomly generated according to a Gaussian distribution).

The memory 104 includes a first computer-implemented model 116 that is trained to perform the task based upon the first training data 108 (including the feature 1 values 110 and the feature 2 values 112 ). The first computer-implemented model 116 can be any suitable type of trainable computer-implemented model, including a deep neural network (DNN), a convolutional neural network (CNN), a recurrent neural network (RNN), or the like. Therefore, the first computer-implemented model 116 can include nodes that represent activation functions and edges that represent connections between activation functions.

The memory 104 also includes a trainer module 118 that trains the first computer-implemented model 116 to perform the task based upon the first training data 108. More specifically, the trainer module 118 utilizes any suitable approach for learning weights assigned to the edges of the first computer-implemented model 116. In an example, backpropagation can be employed to learn the weights of the edges of the first computer-implemented model 116, where a loss function is minimized. Once trained, when the first computer-implemented model 116 is provided with an input vector that includes a value for the first feature and a value for the second feature, the first computer-implemented model 116 outputs a label based upon the input vector (e.g., where the label identifies, for example, a type of object captured in the sensor data, such as a pedestrian, a compact vehicle, etc.).

The data store 106 also includes validation data 120. The validation data 120 includes an input vector 122, where the input vector 122 includes a first value for the first feature (feature 1 value) 124 and a second value for the second feature (feature 2 value) 126. In addition, the validation data 120 includes a label 128 that is assigned to the input vector 122. For example, the label 128 can identify a class that the first computer-implemented model 116 output when provided with the input vector 122 as input. While not illustrated, the validation data 120 includes numerous input vectors that have labels assigned thereto.

The memory 104 additionally comprises a gradient determiner module 130 that is configured to compute gradient values for the first feature and the second feature with respect to the first computer-implemented model 116, where the gradient values are computed based upon the validation data 120. Put differently, the gradient determiner module 130, for all input vectors and corresponding labels (outputs) in the validation data 120, computes gradients of the outputs of the first computer-implemented model 116 in regard to the input features. The gradient determiner module 130 then sums the gradients per feature, resulting in the first feature being assigned a first score and the second feature being assigned asecond score. The first score is indicative of influence of values of the first feature on the outputs of the first computer-implemented model 116 while the second score is indicative of influence of values of the second feature on the outputs of the first computer-implemented model 116. In still more detail, the gradient determiner module 130 employs a form of backpropagation in connection with computing the gradients of the outputs of the first computer-implemented model 116 with respect to the features. Typically, when backpropagation is employed in connection with training computer-implemented models, the input values are fixed and gradients are learned with respect to weights assigned to edges. To compute gradients corresponding to the features, the weights of the trained first computer-implemented model 116 are fixed and gradients corresponding to the input values are computed.

The memory 104 also includes a feature selector module 132 that receives scores output by the gradient determiner module 130 and selects a subset of the features based upon the scores. In an example, when the second feature is noise and the first score for the first feature is above the second score for the second feature, the first feature can be selected for use when training another computer-implemented model. Contrarily, when the first score is less than the second score (e.g., when values of noise are more influential on outputs of the first computer-implemented model 116 than values of the first feature), then the first feature is excluded for use when training another computer-implemented model. In another example, the feature selector module 132 is configured to select a threshold number of features that are assigned the threshold number of highest scores from amongst scores output by the gradient determiner module 130. In still yet another example, the feature selector module 132 compares the first score for the first feature with a predefined threshold score and determines whether to employ the values of the first feature to train another computer-implemented model based upon such comparison. The feature selector module 132 can perform the same comparison when determining whether to use values of the second feature to train another computer-implemented model.

In an example, the feature selector module 132 determines that values for the first feature are to be employed when training another computer-implemented model and determines that values of the second feature are to be excluded when training the another computer-implemented model. The data store 106 includes second training data 134 that, continuing with the example above, includes the feature 1 values 110 but does not include the feature 2 values 112. While Fig. 1 depicts the feature 1 values 110 being included in two separate sets of training data 108 and 134, such depiction is set forth for sake of illustration. In reality, the data store 106 will likely include only one instance of the feature 1 values 110.

The computing system 100 also includes a second computer-implemented model 136. The second computer-implemented model 136 optionally has the same architecture as the first computer-implemented model 116. The trainer module 118 trains the second computer-implemented model 136 to perform the task based upon the feature 1 values 110 while refraining from training the second computer-implemented model 136 using the feature 2 values 112 (as the feature selector module 132 output an indication that the feature 2 values 112 are not to be employed when training the second computer-implemented model 136). The above described process can be iterated until a relatively small number (e.g., a minimum number) of features are identified for training a final computer-implemented model. Such final computer-implemented model can have substantially similar performance (accuracy) as the first computer-implemented model 116 with respect to the task but requires less compute, requires less memory for storing input vectors, and so forth.

There are numerous advantages associated with the technologies described above. When one of the features being evaluated includes values for random noise, such feature can be a reference point for determining feature importance. For instance, use of noise is a feature provides an effective ranking of features based on their gradient impact on the output of the first computer-implemented model 116. In addition, an iterative process of eliminating less critical features relative to noise assists with further refining a feature set to use when training a final computer-implemented model as the final computer-implemented model requires less computing resources to execute, it may be possible to employ cheaper sensors that output fewer feature values, thereby improving economics of a deployment that includes the final computer-implemented model. The above described technologies are also believed to reduce computational cost (e.g., GPU memory), training and inference time, and bandwidth required for deep learning models through selecting and limiting the number of features considered by the computer-implemented model when generating outputs.

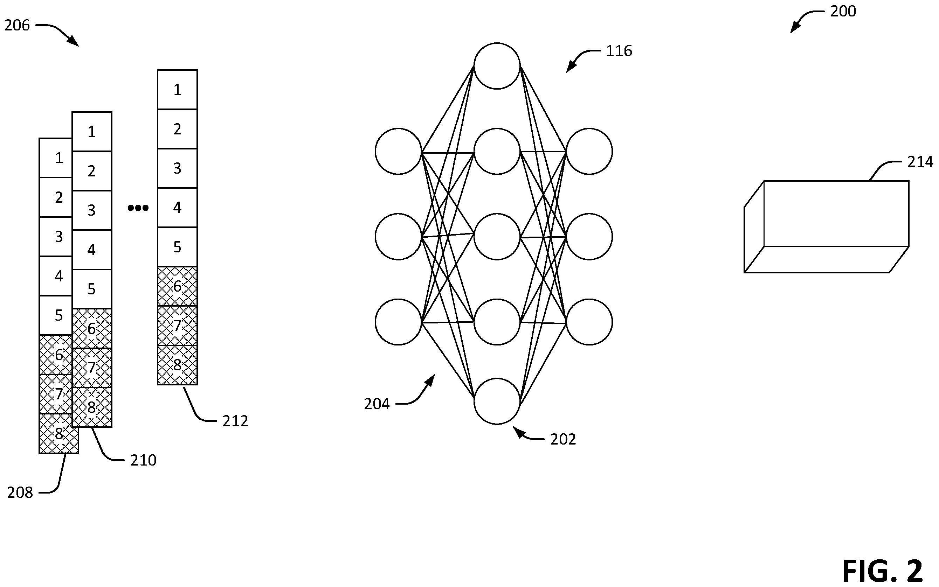

Now referring to Fig. 2, a schematic 200 that depicts training of the first computer-implemented model 116 is illustrated. As illustrated in Fig. 2, the first computer-implemented model 116 includes nodes 202 and edges 204. The trainer module 118 trains the first computer-implemented model 116 based upon training data 206. The training data 206 includes several input vectors 208-212. In the example shown in Fig. 2, each of the input vectors 208-212 includes eight values for eight different features. The first five values in the input vectors 208-212 can be values for five different features of sensor data. The last three values in the feature vectors 208-212 can be values for noise, wherein such values can be randomly or pseudo-randomly generated in accordance with a predefined distribution. While not illustrated, each of the input vectors 208-212 in the training data 206 has a label assigned thereto. For instance, the first input vector 208 has the label "pedestrian" assigned thereto, the second input vector 210 has the label "compact vehicle" assigned thereto, and so forth. Upon the first computer-implemented model 116 being trained, the first computer-implemented model 116 is configured to output a label for an object 214 when provided with an input vector that includes 8 values for the 8 features. Therefore, in the example shown in Fig. 2, the first computer-implemented model 116 is trained based upon values of five different features of sensor data and values for three different noise features.

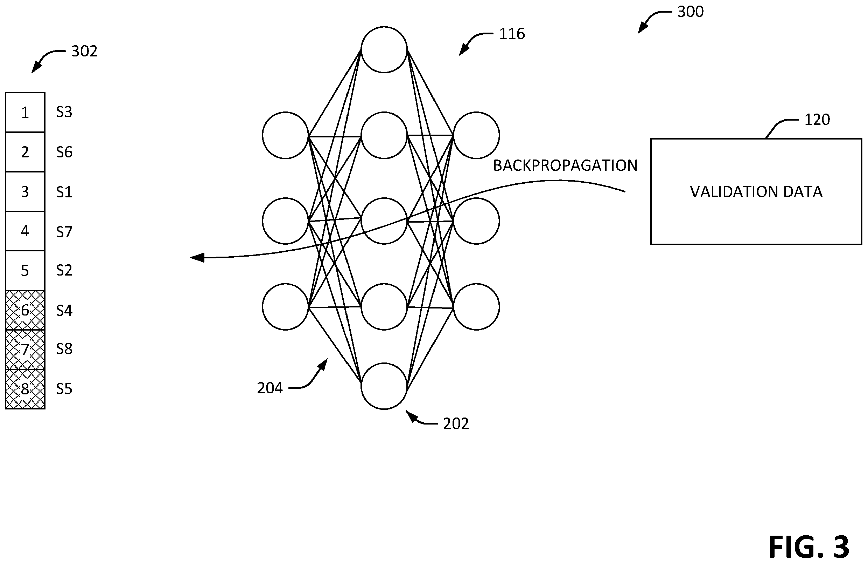

With reference to Fig. 3, a schematic depicting computation of scores for the 8 features referenced above is presented. A representative vector 302 depicts the eight different features. The gradient determiner module 130 computes an importance score for each of the 8 features based on gradient values of all samples in the validation data 120. The weights of the first computer-implemented model 116 are frozen (held steady), and backpropagation is employed to compute the importance scores for the features shown in the vector 302. As noted above, an importance score for a feature is indicative of influence of values of the feature on outputs of the first computer-implemented model 116. As depicted in Fig. 3, feature 1 is assigned a score of S3, feature 2 is assigned a score of S6, feature 3 is assigned a score of S 1, feature 4 is assigned a score of S7, feature 5 is assigned a score of S2, feature 6 is assigned a score of S4, feature 7 is assigned a score of S8, and feature 8 is assigned a score of S5. For purposes of illustration, the numerical value associated with the score is indicative of relative value of the score (e.g., score S1 is higher than score S2). Thus, score S3 assigned to feature 1 is the third highest score, while score S6 assigned to feature 2 is the sixth highest score.

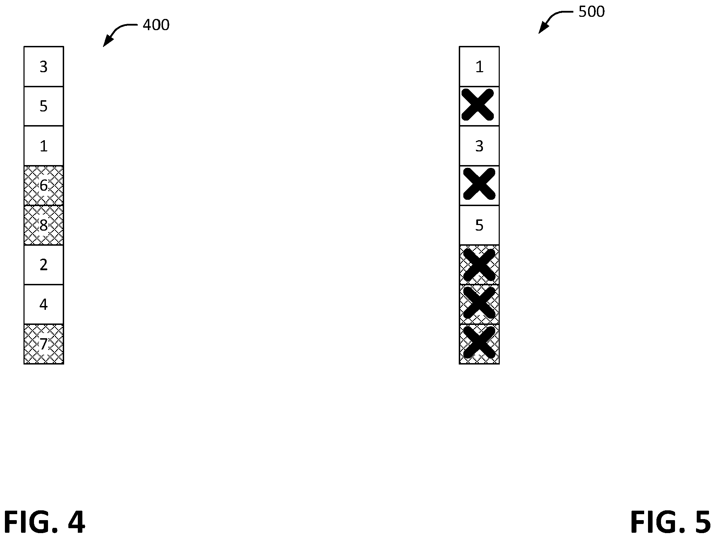

Referring briefly to Fig. 4, a schematic 400 depicting a ranking of the features according to the scores assigned to such features (Fig. 3) is presented. As illustrated in Fig. 4, the feature 3 has the highest score, feature 5 has the second highest score, the feature 1 has the third highest score, feature 6 has the fourth highest score, feature 8 has the fifth highest score, feature 2 has the sixth highest score, feature 4 has the seventh highest score, and feature 7 has the eighth highest score. It can be ascertained that feature 2 and feature 4 have scores assigned thereto that are below scores assigned to at least one noise feature (noise features 6 and 8 ).

Turning to Fig. 5, a schematic 500 that depicts features selected by the feature selector module 132 based upon the ranking of the features shown in Fig. 4 is presented. In the example shown in Fig. 5, the feature selector module 132 selects features 1, 3, and 5, while discarding features 2, 4, and 6-8. The feature selector module 132 discards features 2 and 4 due to scores assigned thereto being below a score assigned to at least one noise feature. The feature selector module 132 discards features 6-8 as such features are noise features and should not have significant influence on the output of the first computer-implemented model 116.

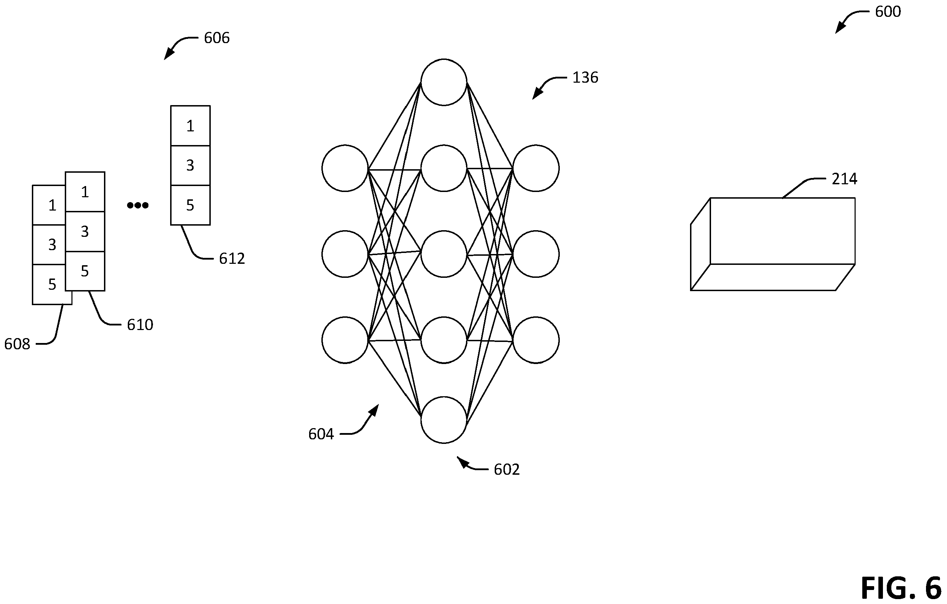

Referring now to Fig. 6, a schematic 600 depicting training of the second computer-implemented model 136 is shown. Like the first computer-implemented model 116, the second computer-implemented model 136 includes nodes 602 and edges 604. The trainer module 118 trains the second computer-implemented model 136 based upon training data 606 that includes input vectors 608-612 and corresponding class labels. It is noted, however, that the input vectors 608-612 include values for features 11, 3, and 5, but fail to include values for features 2 and 4 (and noise features 6-8). Therefore, rather than being trained based upon 5 features of sensor data, the trainer module 118 trains the second computer-implemented model 136 based upon 3 features of the sensor data. Once trained, the second computer-implemented model 136 outputs a label for the object 214 based upon an input vector that includes values for features 1, 3, and 5. While not illustrated, the above described process can be repeated several times until a minimal number of features is identified. For instance, randomly generated values for noise can be appended to the vectors 608-612, and the second computer-implemented model 136 can be trained based upon values for features 1, 3, 5, and values for the noise feature. After the second computer-implemented model 600 is trained, importance scores for the four features can be computed and if a score of one of the features 1, 3, or 5 is below the score for the noise feature, then a third computer-implemented model can be trained based upon a smaller number of features. In an example, a ratio of "real" features and noise features can be predefined. For instance, for every five real features one noise feature can be added.

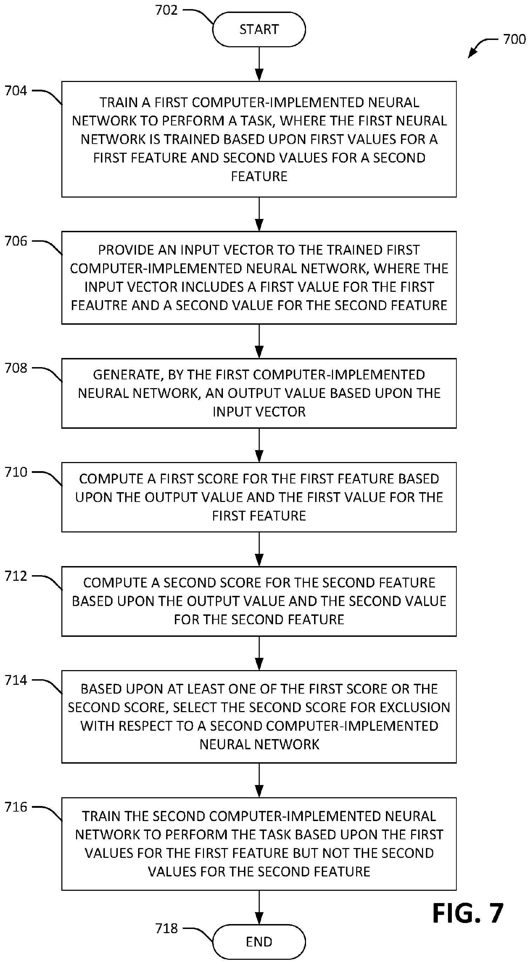

Figs. 7-8 illustrate exemplary methods relating to identifying features to use when training a computer-implemented model to perform a task. While the methods are shown and described as being a series of acts that are performed in a sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium, displayed on a display device, and/or the like.

Now referring solely to figure 7, a flow diagram depicting a method 700 related to training a neural network to perform a classification task is illustrated. The method 700 starts at 702, and at 704 a first computer-implemented neural network is trained to perform a task, where the first neural network is trained based upon first values for a first feature and second values for a second feature. As described above, the features may be features of sensor data. In another example, at least one of the first feature or second feature can be noise.

At 706, subsequent to the first computer-implemented neural network being trained, an input vector is provided to the trained first computer-implemented neural network. The input vector includes a first value for the first feature and a second value for the second feature. At 708, the first computer-implemented neural network generates an output value (e.g., a label) based upon the input vector. At 710, a first score is computed for the first feature based upon the output value generated by the first computer-implemented neural network and the first value for the first feature. At 712, a second score for the second feature is computed based upon the output value generated by the first computer-implemented neural network and the second value for the second feature. The first score computed at 710 is indicative of influence of the first value for the first feature on the output value generated by the computer-implemented neural network. Similarly, the second score computed at 712 is indicative of influence of the second value for the second feature on the output value generated by the computer-implemented neural network.

At 714, based upon at least one of the first score or the second score, the second feature is selected for exclusion with respect to a second computer-implemented neural network. Put differently, the second computer-implemented neural network is to be trained based upon a set of features that fails to include the second feature. At 716, the second computer-implemented neural network is trained to perform the task, where the second computer-implemented neural network is trained based upon the first values for the first feature but is not trained based upon the second values for the second feature due to the second feature being selected for exclusion with respect to the second computer-implemented neural network. The method 700 completes at 718.

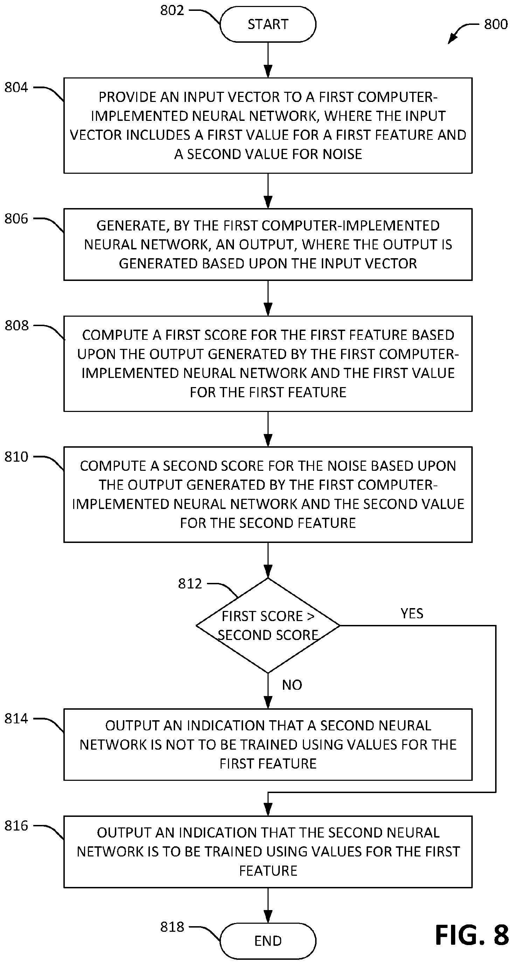

Now referring to Fig. 8, a flow diagram illustrating a method 800 for identifying a feature that is to be used to train a neural network is illustrated. The method 800 starts at 802, and at 804 an input vector is provided to a first computer-implemented neural network. The input vector includes a first value for a first feature and a second value for a second feature, where the second feature is noise. The first computer-implemented neural network is trained to perform a task based upon values for features that include the first feature and the second (noise) feature.

At 806, the first computer-implemented neural network generates an output based upon the input vector. As referenced above, the output can be a label assigned to an object in an environment of a sensor system. At 808, a first score for the first feature is computed based upon the output generated by the first computer-implemented neural network and the first value for the first feature. The first score is indicative of influence of the first feature on outputs generated by the first computer-implemented neural network.

At 810, a second score for the second feature is computed based upon the output generated by the first computer-implemented neural network and the second value for the second feature. The second score is indicative of influence of the second feature on the outputs generated by the first computer-implemented neural network.

At 812, a determination is made as to whether the first score is greater than the second score (e.g., a determination is made as to whether the first feature has greater influence on output of the first computer-implemented neural network than noise). When it is determined that the first score is not greater than the second score, then at 814 an indication is output that a second neural network is not to be trained using values for the first feature. Contrarily, when the first score is greater than the second score, then at 816 an indication is output that the second neural network is to be trained using values for the first feature. The method 800 completes at 818.

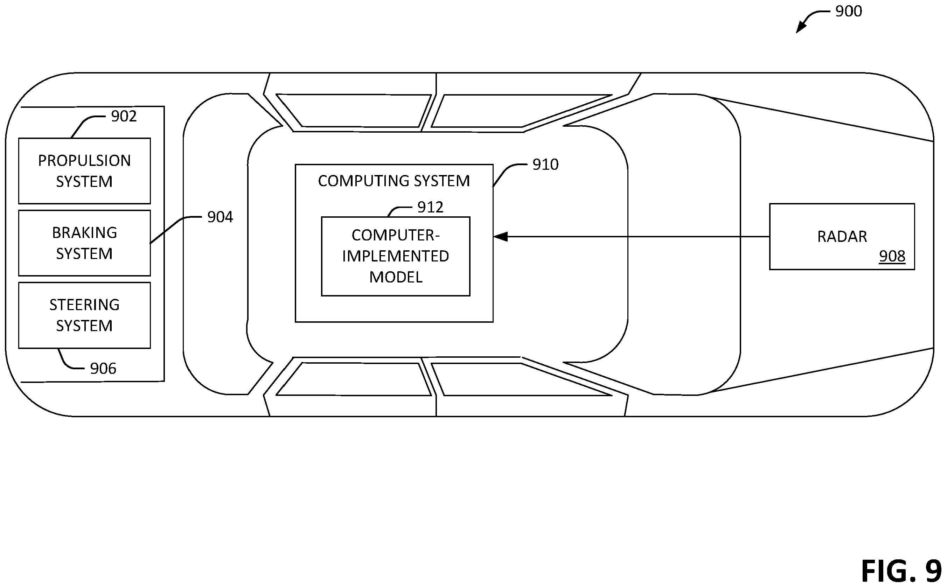

Fig. 9 is a schematic of an autonomous vehicle 900. The autonomous vehicle 900 includes a propulsion system 902, such as an engine, a motor, etc. The autonomous vehicle 900 also includes a braking system that is configured to decelerate the autonomous vehicle 900. The autonomous vehicle 900 further includes a steering system 906 that is configured to direct the autonomous vehicle 900 in a desired direction.

The autonomous vehicle 900 also includes a radar system 908 that generates and outputs radar data, where the radar data is indicative of objects in an environment of the autonomous vehicle 900. The autonomous vehicle 900 also includes a computing system 910 that is in communication with the radar system 908, where the computing system 910 receives sensor data based upon the radar data generated by the radar system 908. The sensor data can be raw radar data, processed radar data, etc. The computing system 910 executes a computer-implemented model 912 that has been trained based upon a feature set identified by way of the technologies described above. Hence, the computer-implemented model 912 receives an input vector that includes values for features of sensor data and performs a task based upon the input vector. As will be understood, the computer-implemented model 912 continuously receives input vectors and identifies objects in the environment of the autonomous vehicle 900 based upon such input vectors.

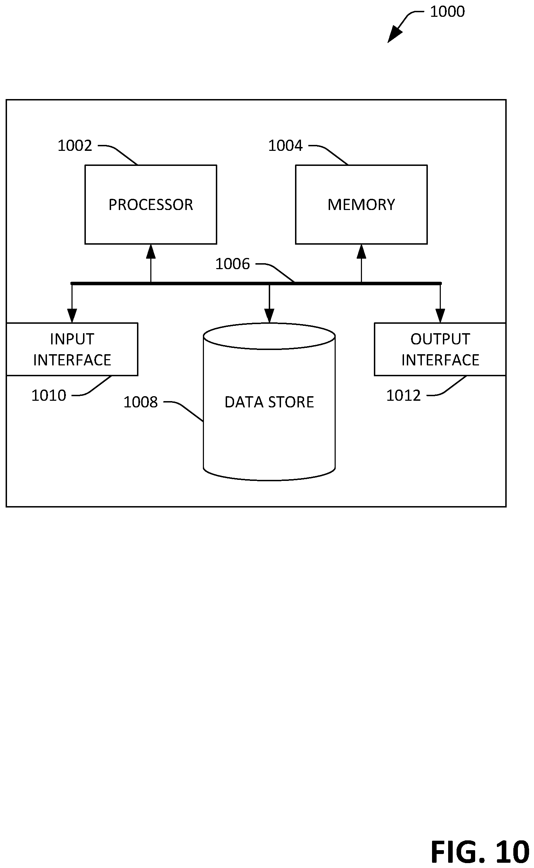

Referring now to Fig. 10, a high-level illustration of a computing device 1000 that can be used in accordance with the systems and methodologies disclosed herein is illustrated. For instance, the computing device 1000 may be used in a system that is configured to train a computer-implemented model. By way of another example, the computing device 1000 can be used in an autonomous vehicle and can perform a classification task based upon input vectors. The computing device 1000 includes at least one processor 1002 that executes instructions that are stored in a memory 1004. The instructions may be, for instance, instructions for implementing functionality described as being carried out by one or more components discussed above or instructions for implementing one or more of the methods described above. The processor 1002 may access the memory 1004 by way of a system bus 1006. In addition to storing executable instructions, the memory 1004 may also store training data, validation data, input vectors, class labels, etc.

The computing device 1000 additionally includes a data store 1008 that is accessible by the processor 1002 by way of the system bus 1006. The data store 1008 may include executable instructions, training data, validation data, etc. The computing device 1000 also includes an input interface 1010 that allows external devices to communicate with the computing device 1000. For instance, the input interface 1010 may be used to receive instructions from an external computer device, from a user, etc. The computing device 1000 also includes an output interface 1012 that interfaces the computing device 1000 with one or more external devices. For example, the computing device 1000 may display text, images, etc. by way of the output interface 1012.

It is contemplated that the external devices that communicate with the computing device 1000 via the input interface 1010 and the output interface 1012 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 1000 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 1000 may be a distributed system. Thus, for instance, several devices may be in communication by way of a network connection and may collectively perform tasks described as being performed by the computing device 1000.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Various features have been described herein in accordance with at least the following examples.

(A1) In an aspect, a method for identifying input features for a computer-implemented neural network includes providing an input vector to a first computer-implemented neural network, where the input vector includes a first value for a first feature and a second value for a second feature, the second feature is noise, and further where the first computer-implemented neural network is trained to perform a task based upon values for features that include the first feature and the second feature. The method also includes generating, by the first computer-implemented neural network, an output, where the output is generated based upon the input vector. The method further includes computing a first score for the first feature based upon the output generated by the first computer-implemented neural network and the first value for the first feature, where the first score is indicative of influence of the first feature on outputs generated by the first computer-implemented neural network. The method additionally includes computing a second score for the second feature based upon the output generated by the first computer-implemented neural network and the second value for the second feature, where the second score is indicative of influence of the second feature on the outputs generated by the first computer-implemented neural network. The method also includes comparing the first score with the second score. The method further includes outputting an indication that a second computer-implemented neural network that is to be trained to perform the task should not be trained using values for the first feature, where the indication is output based upon the comparing of the first score with the second score.

(A2) In some embodiments of the method of (A1), the method also includes training the second computer-implemented neural network to perform the task, where the second computer-implemented neural network is trained using values for a third feature but not values for the first feature or values for the second feature.

(A3) In some embodiments of the method of at least one of (A1)-(A2), the first feature is a feature of a radar signal.

(A4) In some embodiments of the method of at least one of (A1)-(A2), where the first feature is a feature of a lidar signal.

(A5) In some embodiments of the method of at least one of (A1)-(A4), the indication is output due to the first score and the second score indicating that the second feature has greater influence on outputs of the first computer-implemented neural network than the first feature.

(A6) In some embodiments of the method of at least one of (A1)-(A5), the method additionally includes sampling from a Gaussian distribution to obtain a sample value, where the second value for the second feature is the sampled value.

(A7) In some embodiments of the method of at least one of (A1)-(A6), backpropagation is employed in connection with computing the first score and the second score.

(A8) In some embodiments of the method of at least one of (A1)-(A7), the input vector includes multiple values for multiple noise features.

(B 1) In another aspect, a method includes training a first computer-implemented neural network to perform a task, where the first computer-implemented neural network is trained based upon first values for a first feature and second values for a second feature. The method also includes providing an input vector as input to the first computer-implemented neural network, where input vector is provided as input to the first computer-implemented neural network subsequent to the first computer-implemented neural network being trained, where the input vector comprises a first value for the first feature and a second value for the second feature. The method further includes generating, by the first computer-implemented neural network, an output value based upon the input vector. The method additionally includes computing a first score for the first feature based upon the output value and the first value for the first feature, where the first score is indicative of influence of the first value for the first feature on the output value generated by the computer-implemented neural network. The method additionally includes computing a second score for the second feature based upon the output value and the second value for the second feature, where the second score is indicative of influence of the second value for the second feature on the output value generated by the computer-implemented neural network. The method also includes selecting the second feature for exclusion with respect to a second computer-implemented neural network, where the second feature is selected for exclusion based upon at least one of the first score or the second score. The method further includes training the second computer-implemented neural network to perform the task, where the second computer-implemented neural network is trained based upon the first values for the first feature but is not trained based upon the second values for the second feature due to the second feature being selected for exclusion with respect to the second computer-implemented neural network.

(B2) In some embodiments of the method of (B 1), the method also includes comparing the first score with the second score, where the second score is selected for exclusion with respect to the second computer-implemented neural network based upon the comparing of the first score with the second score.

(B3) In some embodiments of the method of at least one of (B 1)-(B2), the method also includes ranking the first feature relative to the second feature based upon the first score for the first feature and the second score for the second feature, where the second feature is selected for exclusion with respect to the second computer-implemented neural network based upon the ranking of the first feature relative to the second feature.

(B4) In some embodiments of the method of at least one of (B 1)-(B3), the first computer-implemented network is trained to perform the task based further upon third values for a third feature, the third feature is noise, the third values are randomly or pseudo-randomly generated, and the input vector comprises a third value for the third feature. In addition, the method also includes computing a third score for the third feature based upon the output value and the third value for the third feature, where the third score is indicative of influence of the third value for the third feature on the output value generated by the computer-implemented neural network, where the second feature is selected for exclusion with respect to the second computer-implemented neural network based upon the third score.

(B5) In some embodiments of the method of (B4), the second feature is selected for exclusion with respect to the second computer-implemented neural network based upon the third score being higher than the second score.

(B6) In some embodiments of the method of (B5), the second computer-implemented neural network is not trained based upon the third values for the third feature due to the third feature being noise.

(B7) In some embodiments of the method of at least one of (B 1)-(B6), the first score is computed based upon a gradient of the first value of the first feature with respect to the output value and further where the second score is computed based upon a gradient of the second value of the second feature with respect to the output value.

(B8) In some embodiments of the method of at least one of (B 1)-(B7), the method also includes providing a second input vector as input to the first computer-implemented neural network, where the second input vector is provided as input to the first computer-implemented neural network subsequent to training the first computer-implemented neural network, and further where the second input vector comprises a third value for the first feature and a fourth value for the fourth feature. The method further includes generating, by the first computer-implemented neural network, a second output value based upon the input vector, where the first score is computed based further upon the second output value and the third value for the first feature, and further where the second score is computed based further upon the second output value and the fourth value for the fourth feature.

(B9) In some embodiments of the method of (B8), computing the first score includes: 1) computing a first gradient value based upon the first value of the first feature and the output; 2) computing a second gradient value based upon the third value of the first feature and the second output; and 3) summing the first gradient value and the second gradient value, where the first score is based upon the summing of the first gradient value and the second gradient value. Computing the second score includes: 1) computing a third gradient value based upon the second value of the second feature and the output; 2) computing a fourth gradient value based upon the fourth value of the second feature and the second output; and 3) summing the third gradient value and the fourth gradient value, where the second score is based upon the summing of the third gradient value and the fourth gradient value.

(B 10) In some embodiments of the method of at least one of (B1)-(B9), the first score and the second score are computed by way of backpropagating the output score through the first computer-implemented neural network.

(B11) In some embodiments of the method of (B 10), the first computer-implemented neural network comprises a plurality of hidden layers that have weight matrices respectively assigned thereto, and further where weights of the weight matrices are held static when backpropagating the output score through the first computer-implemented neural network.

(C1) In yet another aspect, a computing system includes a processor and memory, where the memory stores instructions that, when executed by the processor, cause the processor to perform at least one of the methods disclosed herein (e.g., any of (A1)-(A8) or (B1)-(B11)).

(D1) In still yet another aspect, a computer-readable storage medium includes instructions that, when executed by a processor, cause the processor to perform at least one of the methods disclosed herein (e.g., any of (A1)-(A8) or (B1)-(B 11)).

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A computing system comprising:
a processor; and
memory storing instructions that, when executed by the processor, cause the processor to perform acts comprising:
training a first computer-implemented neural network to perform a task, where the first computer-implemented neural network is trained based upon first values for a first feature and second values for a second feature;
subsequent to training the first computer-implemented neural network, providing an input vector as input to the first computer-implemented neural network, where the input vector comprises a first value for the first feature and a second value for the second feature;
generating, by the first computer-implemented neural network, an output value based upon the input vector;
computing a first score for the first feature based upon the output value and the first value for the first feature, where the first score is indicative of influence of the first value for the first feature on the output value generated by the computer-implemented neural network;
computing a second score for the second feature based upon the output value and the second value for the second feature, where the second score is indicative of influence of the second value for the second feature on the output value generated by the computer-implemented neural network;
based upon at least one of the first score or the second score, selecting the second feature for exclusion with respect to a second computer-implemented neural network; and
training the second computer-implemented neural network to perform the task, where the second computer-implemented neural network is trained based upon the first values for the first feature but is not trained based upon the second values for the second feature due to the second feature being selected for exclusion with respect to the second computer-implemented neural network.

2. The computing system of claim 1, the acts further comprising:
comparing the first score with the second score, where the second score is selected for exclusion with respect to the second computer-implemented neural network based upon the comparing of the first score with the second score.

3. The computing system of at least one of claims 1-2, the acts further comprising:
ranking the first feature relative to the second feature based upon the first score for the first feature and the second score for the second feature, where the second feature is selected for exclusion with respect to the second computer-implemented neural network based upon the ranking of the first feature relative to the second feature.

4. The computing system of at least one of claims 1-3, where the first computer-implemented network is trained to perform the task based further upon third values for a third feature, the third feature is noise, the third values are randomly or pseudo-randomly generated, the input vector comprises a third value for the third feature, and further where the acts further comprise:
computing a third score for the third feature based upon the output value and the third value for the third feature, where the third score is indicative of influence of the third value for the third feature on the output value generated by the computer-implemented neural network, where the second feature is selected for exclusion with respect to the second computer-implemented neural network based upon the third score.

5. The computing system of claim 4, where the second feature is selected for exclusion with respect to the second computer-implemented neural network based upon the third score being higher than the second score.

6. The computing system of claim 5, where the second computer-implemented neural network is not trained based upon the third values for the third feature due to the third feature being noise.

7. The computing system of at least one of claims 1-7, where the first score is computed based upon a gradient of the first value of the first feature with respect to the output value and further where the second score is computed based upon a gradient of the second value of the second feature with respect to the output value.

8. The computing system of at least one of claims 1-7, the acts further comprising:
subsequent to training the first computer-implemented neural network, providing a second input vector as input to the first computer-implemented neural network, where the second input vector comprises a third value for the first feature and a fourth value for the fourth feature; and
generating, by the first computer-implemented neural network, a second output value based upon the input vector, where the first score is computed based further upon the second output value and the third value for the first feature, and further where the second score is computed based further upon the second output value and the fourth value for the fourth feature.

9. The computing system of at least one of claims 1-8, where the first score and the second score are computed by way of backpropagating the output score through the first computer-implemented neural network.

10. The computing system of claim 9, where the first computer-implemented neural network comprises a plurality of hidden layers that have weight matrices respectively assigned thereto, and further where weights of the weight matrices are held static when backpropagating the output score through the first computer-implemented neural network.

11. A method for identifying input features for a computer-implemented neural network, the method comprising:
providing an input vector to a first computer-implemented neural network, where the input vector includes a first value for a first feature and a second value for a second feature, the second feature is noise, and further where the first computer-implemented neural network is trained to perform a task based upon values for features that include the first feature and the second feature;
generating, by the first computer-implemented neural network, an output, where the output is generated based upon the input vector;
computing a first score for the first feature based upon the output generated by the first computer-implemented neural network and the first value for the first feature, where the first score is indicative of influence of the first feature on outputs generated by the first computer-implemented neural network;
computing a second score for the second feature based upon the output generated by the first computer-implemented neural network and the second value for the second feature, where the second score is indicative of influence of the second feature on the outputs generated by the first computer-implemented neural network;
comparing the first score with the second score; and
based upon the comparing of the first score with the second score, outputting an indication that a second computer-implemented neural network that is to be trained to perform the task should not be trained using values for the first feature.

12. The method of claim 11, further comprising:
training the second computer-implemented neural network to perform the task, where the second computer-implemented neural network is trained using values for a third feature but not values for the first feature or values for the second feature.

13. The method of at least one of claims 11-12, where the first feature is a feature of a radar signal.

14. The method of at least one of claims 11-12, where the first feature is a feature of a lidar signal.

15. The method of at least one of claims 11-14, where the indication is output due to the first score and the second score indicating that the second feature has greater influence on outputs of the first computer-implemented neural network than the first feature.
